Europäisches Patentamt

European Patent Office

Office européen des brevets

(11) Publication number: **0 628 812 A1**

# EUROPEAN PATENT APPLICATION

(21) Application number: **93201616.5**

(51) Int. Cl.5: **G01N 30/30**, G05D 23/24

(22) Date of filing: **07.06.93**

(43) Date of publication of application:
**14.12.94 Bulletin 94/50**

(84) Designated Contracting States:
**AT BE CH DE DK ES FR GB GR IE IT LI NL PT SE**

(71) Applicant: **CHROMPACK INTERNATIONAL B.V.**
**Herculesweg 8**
**NL-4338 PL Middelburg (NL)**

(72) Inventor: **Klein Wolterink, Hendrik Theodoor**
**Watertoren 20**
**NL-4336 KC Middelburg (NL)**
Inventor: **Lips, Jürgen Walter Erhard**
**Park de Moucheron 16**
**NL-4336 AX Middelburg (NL)**
Inventor: **Mol, Jan Willem**
**Sluis de Piet 5**
**NL-4471 RE Wophaartsdijk (NL)**

(74) Representative: **de Bruijn, Leendert C. et al**
**Nederlandsch Octrooibureau**
**Scheveningseweg 82**
**P.O. Box 29720**
**NL-2502 LS Den Haag (NL)**

(54) **System for temperature measurement and control using the conductivity of a component.**

(57) A system for measuring and/or controlling the temperature of a component. The component is electrically conductive with a positive or negative temperature coefficient. The component could be a capillary tubing of said conductive material, or coated with such a material, for chromatographic usages. The component is interconnected in a first branche of a resistance measuring bridge circuit. The system is provided with means for detecting the imbalance of the bridge circuit and for direct measuring and/or controlling the temperature, with means for balancing the bridge circuit.

EP 0 628 812 A1

## Field of the invention:

This invention relates generally to a system for measuring and/or controlling the temperature of a component and in particular to improvements in design and operation of gas-chromatography instrumentation.

This invention provides improvements in the system and method for heating, cooling and temperature control in general utilizing resistance heating and resistance measuring techniques.

More specifically, the system permits direct temperature control of a capillary of electrical conductive material, or a capillary coated with such material, for chromatographic usages.

## Summary of the invention:

A temperature control system comprising, in part, of a capillary tube of conductive material having a positive or negative temperature coefficient.

The resistance of such a tube at any moment is, given a known base resistance and the temperature coefficient, a direct indication for the average temperature of the tube.

Also, the same resistance can be used for heating purposes. When putting a current through the tube, it will heat-up due to the resistance heating until a equilibrium is reached with heat-losses to the environment.

Because the driver voltage for the bridge excitation and for the heating process is the same, the signal levels in both actions are the same and thus the dimensioning of the electronics is easy.

But, of course, the sensing current will also heat the tube and therefore the conversion period is made very short, to minimize self-heating. As explained later, the heating and sensing current can be of any kind: DC, rectified AC, or even pure AC as long as the electronics stay within their operating zones and data processing accounts for it.

As known, the resistance (of the tube) can be calculated when both the voltage across and the current flowing through that resistor are known. Here, the tube-resistance is used in a kind of Bridge Circuit, for example a Bridge of Wheatstone provided with means for detecting the imbalance and/or balancing the bridge circuit. One branch of that bridge is formed by the tube (-resistance) and a second resistor, with the second "resistor" preferably formed by a current sensing FET, through which the current can be sensed as well as controlled (switched on/off).

The other branch of the bridge is formed by a series connection of two resistors, preferably by a multiplying DAC. By using the summed equivalent voltages of the power-branch with the tube as reference voltage for the MDAC, in a preferred embodiment of this invention the equilibrium of the bridge can be detected when the MDAC and a comparator are applied as Successive Approximation Register.

When the resistance is known, also the temperature is known. Thus, by using the FET as an on/off switch, also the temperature can be set & controlled at temperatures above ambient.

The low mass and the fast temperature conversion give the system a fast response and is therefore very suitable for direct temperature control of columns, injectors, concentrators and similar chromatographic apparatus.

Because in principle this process is inherent and intrinsic not depending on the driver voltage, a very simple, small and cheap power supply can be used for such a control system.

Of course, also low temperatures can be calculated and therefore, also cooling with an appropriate medium can be regulated.

Such a temperature controlled tube using this ratiometric resistance sensing could be used for a high number of chromatographic applications, including trapping, injection, column temperature control, etc.

## Description of the drawings:

The invention will be explained with reference to the accompanying drawings, in which:

Fig. 1 is an electrical schematic diagram of a usual resister with its associated electrical quantities.

Fig. 2 is a similar diagram of a resistor having Kelvin connections.

Fig. 3 is a schematic diagram of a bridge of Wheatstone.

Fig. 4 is a simplified diagram of an embodiment of the invention.

Fig. 5 illustrates a successive approximation register waveform as used according to the invention.

Fig. 6 shows a typical embodiment of a heat control system according to the invention.

Fig. 7 is a basic electronic diagram of a preferred embodiment of the temperature measuring system according to the invention.

Fig. 8-A up to and including 8-H are diagrams of several waveforms in the embodiment of fig. 7

Fig. 9 is a diagram of the resulting resistance value versus the temperature of the capillary tube.

**Description of the preferred embodiments of the invention:**

For many chromatographic applications it is necessary to maintain the systems or one or more components thereof at a very well controlled temperature.

In particular this invention deals with the temperature control of a capillary tube, made of conductive material having a positive or negative temperature coefficient. A non conductive tube could be made conductive for example by providing a conductive coating.

When the resistance of a tube at a certain temperature is known, and the temperature coefficient of the material at different temperatures is known, then the average temperature of the tube can be calculated when the resistance of the tube can be determined.

Because the resistance of the tubing is normal very low, a very large current is needed to generate a voltage-drop high enough for a resistance measurement as well as to heat the tube for controlling its temperature. Normally, this process requires bulky, expensive power supply units to generate and stabilize the needed voltages and currents.

With the system of this invention, described in detail hereinafter with reference to preferred embodiments, only a simple, cheap power supply is needed. Still it is possible to determine the resistance of a tube -and thus its temperature- and also control the current through that tube, necessary for the SAR-process as well as the heating of the tube.

As described earlier, the measurement of the resistance of a certain tube is sufficient to determine its average temperature. Also, the resistance can be used for heating the tube.

So, if the resistance can be determined and the current can be switched on and off, we have a full temperature control system that only uses the materials own resistance for all of this.

From here, the invention of a system to do so will be discussed thoroughly.

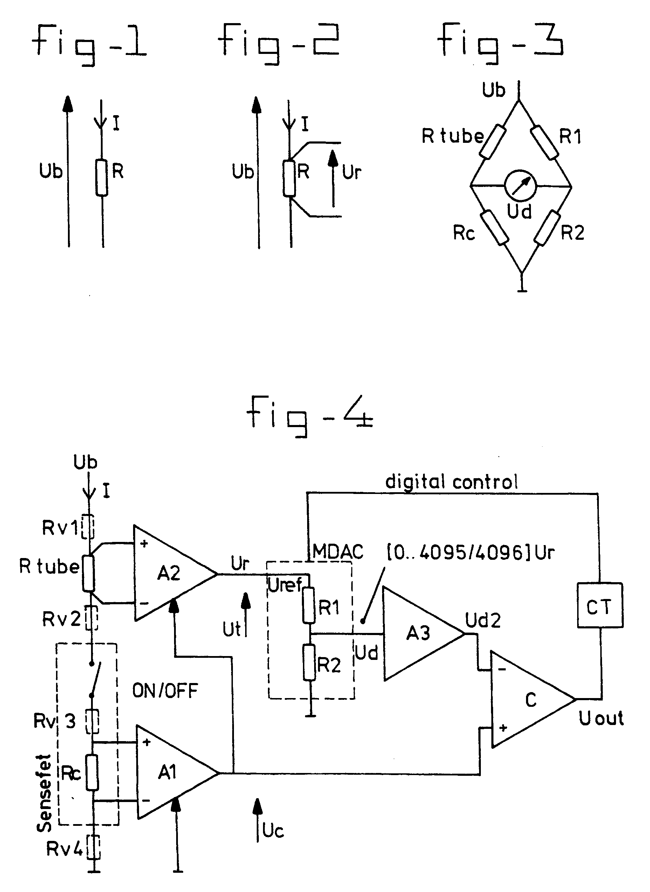

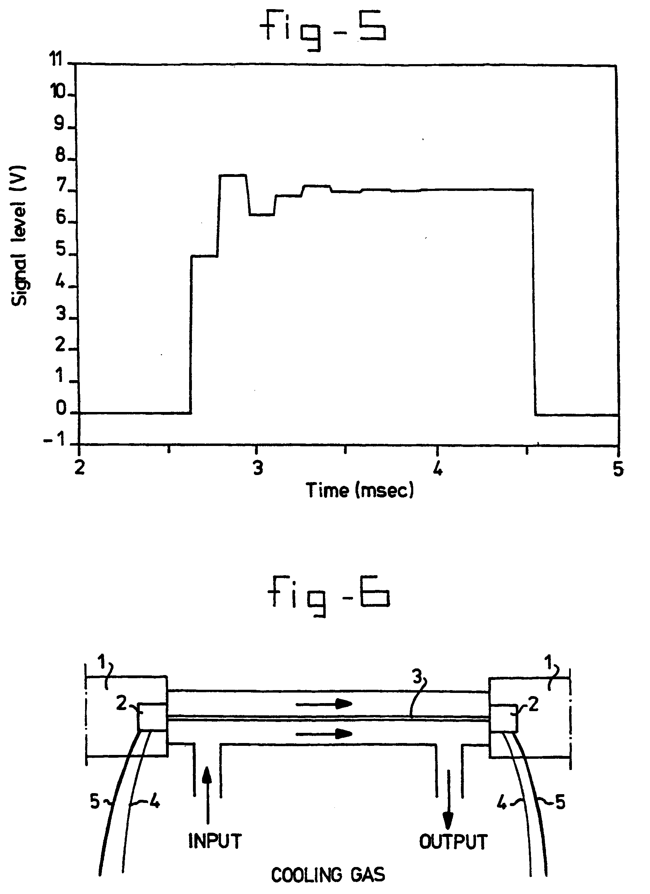

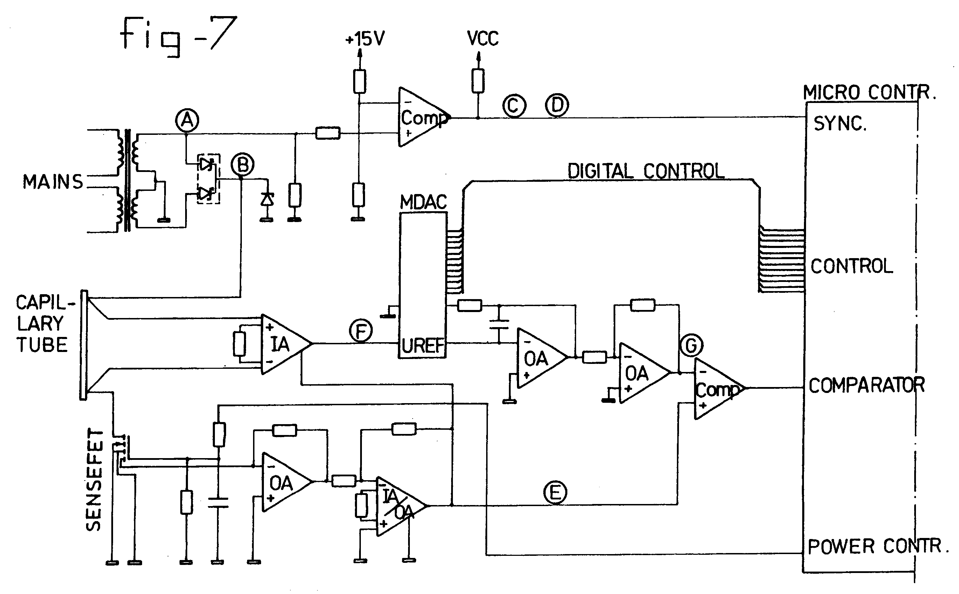

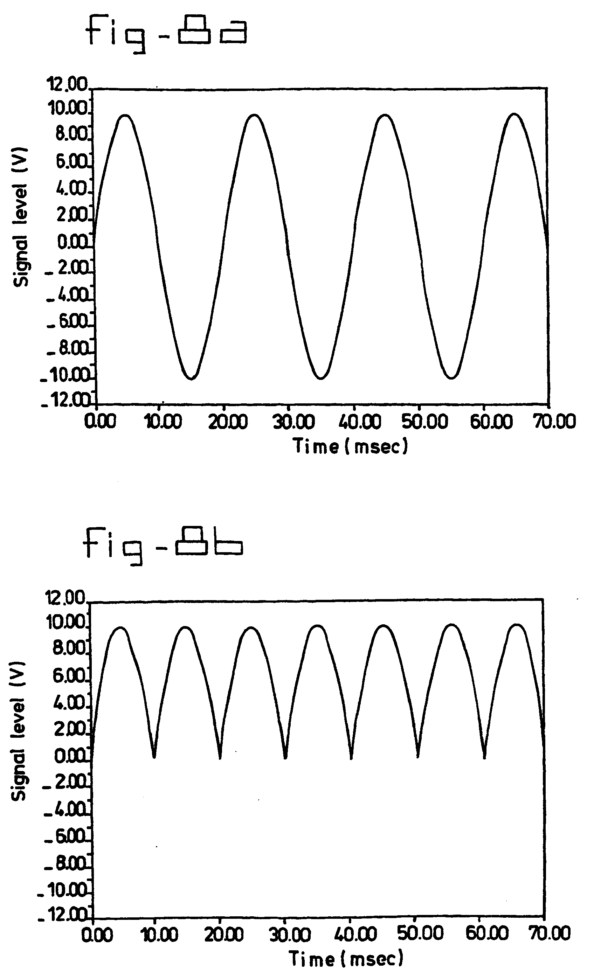

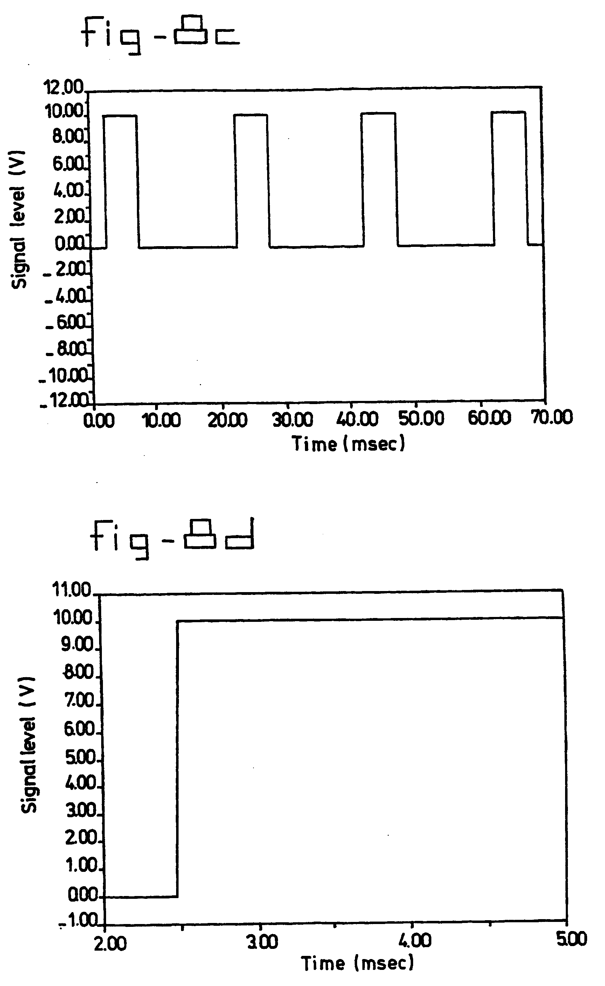

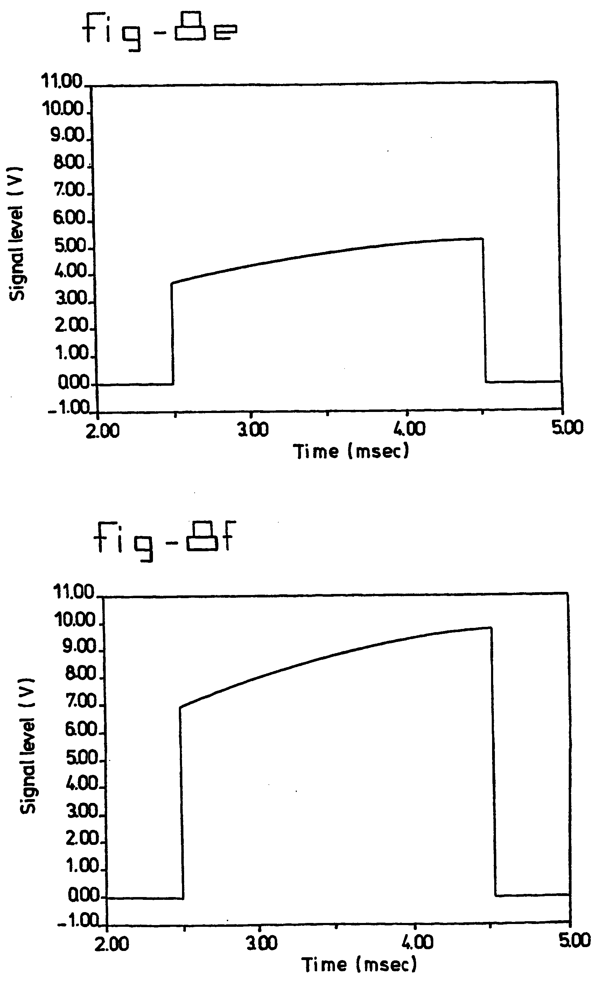

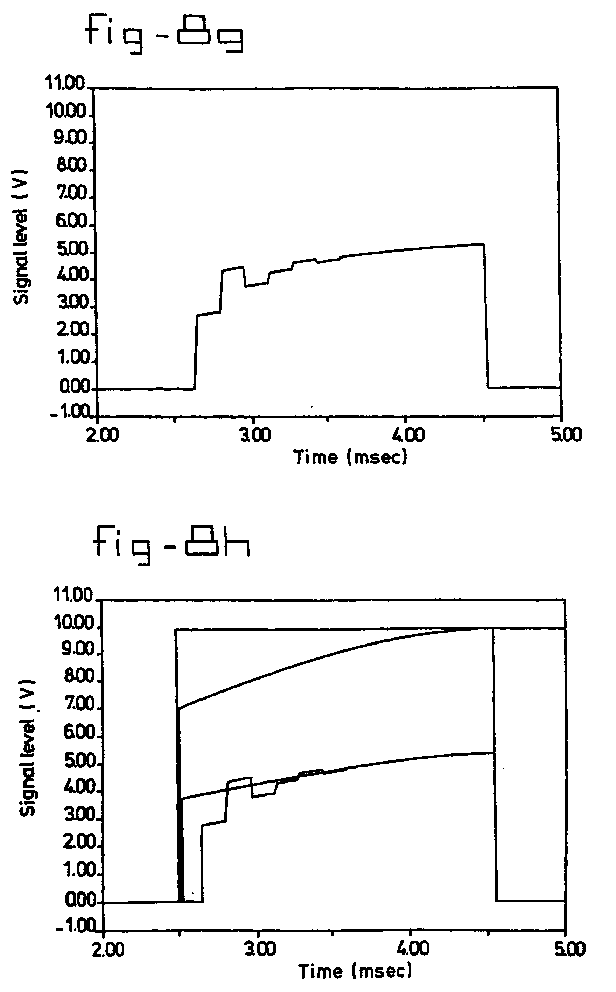

All the basics go back to a simple resistor, as shown in figure 1.

By applying a voltage Ub, a current I will flow through resistor R.

As given in Ohm's law, this will be equal to:

$$I = Ub/R$$

This is true only if the circuit is perfect. In practice, the leads connecting the power supply (Ub) with the resistor R are not perfect. The leads have own resistance, there are solderjoints, etc. Therefore, a more accurate formula is:

$$I = Ub/Rs$$

with Rs being the sum of all resistances in the circuit. This has an effect on all such circuitry, but especially when high currents and low resistances are involved. Also, high resolutions make the measurement more sensitive for those errors.

Given a certain current I, the most accurate way to measure the voltage across a resistor is as close as possible to the resistor itself. This is visualized in figure 2.

These connections are known per sé as Kelvin connections, a standard way to do accurate U,I,R measurements.

The current I generates the voltage Ur. Also, heat is generated in the resistor:

$$P = I^2 \cdot R, \text{ or } P = Ur^2/R$$

If R is a capillary tube with a resistance Rtube, the same is true:

$$P = Ur^2/Rtube$$

This power heats up the capillary tube (-resistor) to Th, where an equilibrium is reached when the electrical heating power equals the loss of power due to temperature difference with the ambient temperature (Ta).

The temperature can be directly calculated from the resistance at ambient temperature (Ra) and the value at temperature Th (Rh):

$$Rh = Ra \cdot (1 + \alpha \cdot \delta T)$$

or

$$\delta T = (Rh\text{-}Ra)/(\alpha \cdot Ra)$$

with

$\alpha$ = temperature coefficient of the capillary (coating) material

$$\delta T = (Th\text{-}Ta)$$

Sofar, the basics have been explained how a resistor can be measured by a current I and how the same current I can account for heating of the resistor or the tube to a temperature Th.

An accurate way to measure a resistor is to use the Wheatstone bridge. It is based on the same rules, but is easier to operate and to obtain accurate results.

The measurement is indirect, as shown in figure 3. A basic bridge consists of four resistors.

In the figure, the names for this patent have been adopted.

The left branch is the "power-branch", with Rtube as the tube resistance and Rc as the second, current sensing, resistor.

The right branch is the ratio-determining section. With an excitation voltage Ub applied to the bridge, the voltage Ud becomes zero (eg. the bridge is "nulled" by balancing means), when the relation is:

$$Rtube/Rc = R1/R2$$

So, when Rc is fixed, the unknown resistor Rtube can be determined if the ratio between R1 and R2 can be regulated by a balancing means in response of the voltage between the midpoints of the two bridge circuit branches. In other words, R1 and R2 form a kind of potentiometer. This R1 + R2 potentiometer has an output voltage Ud that is directly depending on the excitation voltage and the wipers position.

The same function could adequately be performed by a multiplying DAC (MDAC), the output voltage of which is the "weight" of the binary input and the DAC's multiplier input Uref.

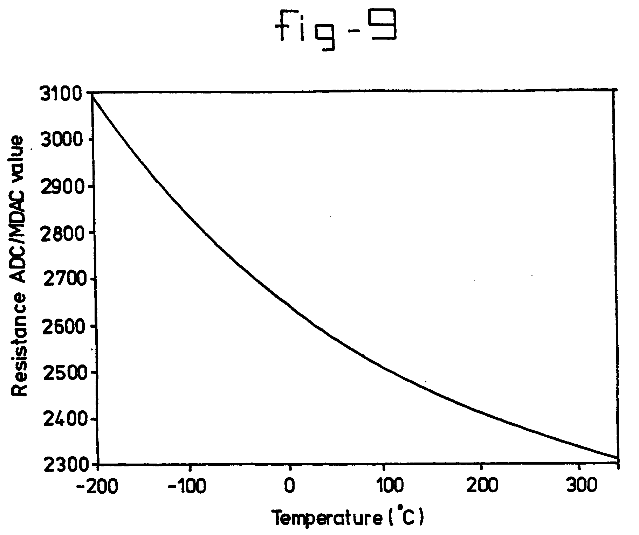

Figure 4 shows a simplified practical realisation of the bridge with the MDAC.

Rtube is the tube (coating) resistance, with Kelvin connections. The Kelvin connections are connected to the input of the instrumentation amplifier A2, the output of which is supplied to the reference input of the MDAC. Rc is the equivalent resistance of a current sensing element and these two resistors form the power-branch of the bridge. Preferably and as shown in fig. 4 and 7 the sensing element is a SenseFet.

In this case the resistor Rc is not a real resistor, but forms with switch Sw a SenseFET. A SenseFET is a Field Effect Transistor (FET) which is equipped with an extra source output, the sense-output. The current that flows out of the sense-output is a small portion of the real source current but directly related to it. This makes it possible to sense the current through the FET without a series resistor in the high current circuit. This way, no extra voltage drop or power loss (=heating) is introduced.

Moreover, the SenseFet together with the used principle have the advantage that very short measurement cycles are possible, which results in small duty cycles with low self-heating. This makes it ideal for heating and cooling.

The sense-output is connected to an amplifier A1, the output of which is supplied to one input of the comparator C. The same output goes to the shift-input of instrumentation amplifier A2 (bootstrap).

The output of the MDAC is coupled to the other input of the comparator C through amplifier A3. In fig. 7 two operational amplifiers OA are used. Said amplifiers are provided for obtaining the correct level and polarisation of the input of the comparator.

The MDAC is represented by resistors R1 and R2; the ratio-values of these resistors being controlled by the binary control input. The digital control signals can be generated by a controller CT in response of the output of the comparator C. The controller could comprise a hardware Successive Approximation Register, but it can also be done by a computer. In the practical implementation a lot of extra conditions must be controlled and taken into account, and therefore a software approach using a computer is favourable. In the first realisation a small single-chip microcontroller was used.

As explained earlier, we must know the resistance of the tube to determine the tube's temperature. The change in the temperature is detected as a change in the resistance if the tube (coating) has a temperature coefficient that is not zero. The highest accuracy can be expected if the material has a large positive or negative value. In practice, however, these values are limited and normally rather small. Thus, the resistance must be determined quite accurate, despite the normally low resistance values and high currents. In such circumstances, all error sources must be taken into account. The main problem was to overcome the parasitic series resistance in the high-current circuit, that are always present due to wire-resistance, soldering joints, FET- and power supply impedance, etc. In figure 4, these parasitic resistances are introduced as Rv1, Rv2, Rv3 and Rv4.

The functioning of the circuit can be explained as follows.

The current in the power branch can be expressed as:

$$I = Ub/(Rv1 + Rtube + Rv2 + Rv3 + Rc + Rv4)$$

also:

$$Uc = I \cdot A1 \cdot Rc = c_1 \cdot I$$
$$Ut = I \cdot A2 \cdot Rtube = c_2 \cdot Rtube \cdot I$$
$$Ur = Uc + Ut = (c_1 + c_2 \cdot Rtube) \cdot I$$

$$Ud = (R2/(R1+R2)) \cdot Ur$$
$$= (c_1 + c_2 \cdot Rtube) \cdot I/(R2/(R1+R2))$$

$$Ud2 = Ud \cdot A3$$

The voltage Ud2 is compared with the midpoint of the power-branch. The output of the comparator Uout controls the SAR software that sets the digital input of the MDAC. A normal SAR sequence for a normal DC driven DAC results in an ADC approach as shown, for reference, in figure 5.

The figure shows the successive approximation DAC pattern for an input signal of 7.100 Volt. In the example, this results in a binary ADC value of 1011010111000, in case of a 12 bit DAC (for 10 V full-scale).

The correct value of the ADC process is established when both inputs of the comparator are equal:

$$Ud2 = Uc$$

This leads to:

$$A3(c_1 + c_2 \bullet Rtube) = c_1(R2/(R1 + R2))$$
$$c_2 \bullet Rtube = c_3(R2/(R1 + R2)) - c_4$$

or

$$Rtube = c_5 \bullet R2/(R1 + R2) - c_6$$

So, using the circuit given, the resistance of the capillary (coating), and thus of its temperature, can be determined without influence of parasitic resistances. Also, the excitation voltage Ub is of no importance. Of course, the voltages and other parameters must be selected in a way that assures proper electronic operation. In this invention the voltage Ub is also used for the heating of the capillary tubing, so it must be high enough to reach the wanted highest temperature.

Despite the principle of the bridge set-up, almost the full power supply voltage can be put to use in heating the capillary tubing. This very powerful feature is obtained by the SenseFet in combination with a current amplifier, which combination transfers the current-to-voltage almost without any losses.

Figure 6 shows a simplified drawing of a typical application of this invention, the control of a Cryo Trap for concentration and injection purposes in a gas-chromatographic environment. The capillary tubing 3, made of stainless steel, is soldered in two brass stubs 2, one on each end. The brass stubs are there for more than one reason. First, they make it possible to connect the wiring, the power & sense-line 5,4, easily. Second, they are used to set the begin and end-temperature of the capillary tube at a fixed value, given by the secondary heating blocks 1. Though not essential, these heating blocks assure a well-defined temperature of the electrical connections. As the resistance is integrated over the full length of the tube, upto and including the electrical connections at the stubs, the temperature of both ends are of importance to the overall accuracy and stability.

The temperature profile, the temperature as a function of the length, is determined by the quality of the tube and the physical layout.

The actual control is done by measuring the electrical resistance of the capillary tube, as stated earlier, and to regulate the coolant flow (p.e. LN2) or the electrical heating power. This makes it possible to obtain any wanted temperature within p.e. -196°C and +350°C. Also combinations of simultaneously cooling and heating can be used for special applications, where fast response, very stable low temperatures, or similar features are required.

Figure 7 shows the basics of the realisation of the electronics for the prototype. All the components and features mentioned earlier can be seen here. Some additions, like the power supply, are made to make the circuit complete. Various voltage waveforms at different positions in the diagram are being displayed in figure 8.

Figure 8A shows the mains voltage,
Figure 8B the rough DC bridge supply voltage,
Figure 8C the sync waveform; Figure 8D the sync extended,
Figure 8E the current through the tube, Figure 8F both power branche voltages summed,
Figure 8G the SAR pattern and Figure 8H the most important waveforms put together.

Note that the ADC-cycle takes place when the sync is high: then the voltages and currents are rather high which improves the overall accuracy. Not all sync pulses lead to an ADC-cycle, it occurs only when needed. When a conversion is needed, the Fet switches on at the beginning of a sync-pulse. After a short delay, the actual conversion takes place by controlling the binary pattern of the MDAC. Then, the Fet can be switched off again. However, if the system must be heated, the Fet remains on for a period determined by the control software. It can be easily seen that the system is completely ratiometric: though the actual excitation & heating voltage is a rectified sinewave, the conversion works perfectly.

As stated, the output of this direct ratiometric converting ADC is a binary value, which directly represents the resistance. Due to the, in this prototype positive, temperature coefficient a graph can be plotted that shows the direct relation between the temperature of the capillary and the output of the converter.

Only a calibration procedure is needed for any capillary to give a direct relation of temperature versus ADC output. Figure 9 shows a plot of the ADC value related to the temperature. In practice, the shape of the plot is more or less stable and determined by the whole electronic and physical setup, so a very simple calibration procedure can be used for full-span calibration. All these features make this direct ratiometric resistance conversion very suitable for a lot of chromatographic applications.

## Claims

1. System for measuring and/or controlling the temperature of a component, characterized in that the component is electrically conductive with a positive or negative temperature coefficient and interconnected in a first branche of a resistance measuring bridge circuit, provided with means for detecting the imbalance of or balancing the bridge circuit.

2. System according to claim 1, characterized in that the component is a conductive capillary tubing.

3. System according to claim 1 or 2, characterized in that the first branche of the bridge circuit includes a series connection of the tubing and a resistor and the second branche a series connection of two resistors.

4. System according to claim 1, 2 or 3, characterized in that the series connected resistors of the second bridge circuit branche are constituted by a multiplying DA converter and that the means for balancing the bridge circuit is provided with a controller connected to the control input of the converter for controlling the output of the converter such that it is equal to the midpoint voltage of the first branche of the bridge circuit.

5. System according to one of the claims 1 - 4, characterized in that the output of the converter is connected to one input of a comparator, that the other comparator input is supplied with a voltage corresponding to that of the midpoint of the first bridge circuit branche and that the comparator output is supplied to the controller.

6. System according to claim 4 or 5, characterized in that the controller is formed by a computer.

7. System according to claim 4 or 5, characterized in that the controller is provided with a successive approximation register.

8. System according to claim 5, 6 or 7, characterized in that at least one amplifier is interconnected between the converter output and the corresponding comparator input.

9. System according to one of the claims 3 - 8, characterized in that the resistor of the first bridge circuit branche is formed by a current sensing element, that the sense output of said element is connected to the input of an amplifier and that the output thereof forms the midpoint of the first bridge circuit branche.

10. System according to one of the claims 4 - 9, characterized in that the tubing is provided with Kelvin contacts connected to the inputs of an instrumentation amplifier, the output of which is connected to the reference input of the multiplying DA convertor and the outputshift is connected to the midpoint voltage as a "boot strap".

11. System according to claim 9 or 10, characterized in that the current sensing element is a SenseFet.

12. System according to claim 11, characterized in that the SenseFet is switched on and off for controlling the average current through the tubing, and thus controlling its temperature.

13. System according to claim 12, characterized in that the tubing is provided with cooling means controlled by an error signal indicating the difference between a set value and the real temperature of the tubing.

# fig-1

# fig-2

# fig-3

# fig-4

## fig-5

Graph: Signal level (V) vs Time (msec)

## fig-6

INPUT    OUTPUT

COOLING GAS

Fig-7

## Fig-8a

## Fig-8b

# Fig-8c

# Fig-8d

Fig-8e

Fig-8f

Fig-8g

Fig-8h

# fig-9

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y<br>A | EP-A-0 293 255 (AMERICAN INTELL-SENSORS)<br>* column 4, line 20 - column 9, line 37;<br>figures 1-8 *<br>--- | 1,2<br>3-9 | G01N30/30<br>G05D23/24 |
| Y<br>A | WO-A-91 00131 (UNIVERSITY OF FLORIDA)<br>* page 12, line 2 - page 16, line 4 *<br>* page 17, line 21 - page 25, line 23;<br>figures 1-6 *<br>--- | 1,2<br>10,13 | |
| A | US-A-5 005 399 (HOLZCLAW ET AL)<br>* column 3, line 13 - column 6, line 5;<br>figures 1-7 *<br>--- | 1-6 | |
| A | US-A-4 506 146 (RICE ET AL)<br>* column 2, line 5 - column 4, line 37;<br>figures 1-4 *<br>--- | 1,4,6 | |
| A | GB-A-2 075 195 (EMI LTD)<br><br>* page 1, line 53 - page 2, line 50;<br>figures 1-4 *<br>--- | 1,3,5,9,<br>11 | |
| A | US-A-4 695 709 (SACHS ET AL)<br>* column 2, line 58 - column 5, line 26;<br>figures 1,2 *<br>----- | 1,2 | TECHNICAL FIELDS SEARCHED (Int.Cl.5)<br><br>G05D<br>G01N |

The present search report has been drawn up for all claims

| Place of search | Date of completion of the search | Examiner |
|---|---|---|
| THE HAGUE | 9 November 1993 | CALARASANU, P |